# EUROPÄISCHE PATENTANMELDUNG

(11) **EP 1 298 599 A1**
(43) Veröffentlichungstag der Anmeldung: **02.04.2003**
(21) Anmeldenummer: 02090310.0
(22) Anmeldetag: 30.08.2002
(51) Int. Cl.: G07F 7/00, G06F 17/60, H04M 15/00, H04M 17/00

(54) **Verfahren zum Betrieb eines Vergebührungssystems und Vergebührungssystem**

(30) Priorität: 01.10.2001 DE 10148540
(71) Anmelder: SIEMENS AKTIENGESELLSCHAFT, 80333 München (DE)
(72) Erfinder: Berg, Andreas, 13591 Berlin (DE); Klatt, Uwe, 13507 Berlin (DE); Ryll, Thomas, 10823 Berlin (DE)

(57) **Zusammenfassung**

Die Erfindung betrifft ein Verfahren zum Betrieb eines Vergebührungssystems zur Vergebührung der Nutzung von Diensten und der Übertragung von Dienstdaten über ein Endgerät (1) unter Nutzung eines Kommunikationsnetzes (2) mit einem Netzbetreiber, wobei das Vergebührungssystem (7) vor der Nutzung eines Dienstes und vor der Übertragung der Dienstedaten eine Nutzungsgebühr und eine Übertragungsgebühr ermittelt, durch Korrelation beider Gebührentypen eine Gesamtgebühr ermittelt und eine Abbuchung der Gebühren von einem Guthabenkonto (8) eines Dienstenutzers initiiert (S9, S33). Des weiteren wird ein Vergebührungssystem zur Durchführung des Verfahrens gezeigt.

## Beschreibung

Die Erfindung betrifft ein Verfahren zum Betrieb eines Vergebührungssystems gemäß dem Oberbegriff des Patentanspruches 1 und ein Vergebührungssystem gemäß dem Oberbegriff des Patentanspruches 11.

Diensteanbieter (Service-Provider) bieten Telekommunikationsdienste Dienstenutzern an, deren Endgeräte über ein Kommunikationsnetz mit den Diensteanbietern verbunden sind. Üblicherweise wird für die Nutzung eines TK-Dienstes und für die hierfür erforderliche Übertragung von Dienstedaten eine Nutzungsgebühr und eine Übertragungsgebühr verlangt. Um die Zahlungsabläufe zwischen dem Dienstanbieter und dem Dienstenutzer zu regeln, greifen Diensteanbieter, die den Zahlungsvorgang regeln, nämlich Payment Service Provider (PSP), auf ein Guthabenkonto (Prepaid-Konto) des Dienstenutzers zu und buchen die für die Nutzung des Dienstes anfallenden Nutzungs- und Übertragungsgebühren ab. Alternativ kann der PSP in einem Postpaid-Modus eine Rechnung über die anfallenden Nutzungsgebühren und Übertragungsgebühren erstellen.

Da ein Netzbetreiber eines Kommunikationsnetzes ohnehin eine in der Regel monatliche Abrechnung der für die Nutzung des Kommunikationsnetzes anfallenden Gebühren für das Endgerät erstellen muss, wird der PSP hierfür gewöhnlicherweise in dem Netzbetreiber des insbesondere mobilen Kommunikationsnetzes angeordnet.

Zudem ist auch das Anordnen des Diensteanbieters innerhalb des Netzbetreibers möglich, so dass den Dienstenutzern, die bereits Kunden des Netzbetreibers sind, insbesondere Telefoniedienste angeboten und die dafür anfallenden Gebühren abgerechnet werden können.

Mit der Öffnung des Telekommunikationsmarktes werden Diensteanbieter und Netzbetreiber voneinandergetrennt, so dass Diensteanbieter, die nicht mit dem Netzbetreiber identisch sind, unter Nutzung des Kommunikationsnetzes eigene Dienstleistungen als Content Provider anbieten konnten. Die PSP sind auch weiterhin in den Netzbetreiber-Einrichtungen angeordnet. Hierbei tritt der Netzbetreiber als Anbieter (Access Provider) des Zugangs zu den angebotenen Diensten auf, wobei er die Bezahlung des Dienstes im Auftrag des Diensteanbieters mittels des PSP mit dem Dienstenutzer regelt. In der Regel wird auf diese Weise die für die Übertragung von Dienstedaten zur Nutzung des Dienstes anfallende Übertragungsgebühr abgerechnet.

Beispielsweise möchte ein Dienstenutzer den Dienst "Elektronisches Versenden eines Bildes mit Hilfe eines mobilen Endgerätes" durch Zugriff auf einen Diensteanbieter nutzen. Für die Nutzung dieses Dienstes fällt eine Nutzungsgebühr von 1 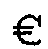 an. Das Endgerät startet eine Übertragung des Bildes über das Mobilfunk-Kommunikationsnetz. Während der Übertragung wird fortlaufend der zu übertragende Datenumfang durch den Netzbetreiber berechnet und die entsprechende Übertragungsgebühr von einem Guthabenkonto des Dienstenutzers abgebucht. Wenn das Guthabenkonto während dieses Übertragungsvorgangs vorzeitig ein Nullniveau erreicht, also kein Guthaben mehr auf dem Konto vorhanden ist, wird die Übertragung der Dienstedaten abgebrochen. Auf diese Weise wird zwar die Nutzung des Dienstes für den Dienstenutzer vergebührt, jedoch kann der Dienstenutzer den Dienst nicht vollständig in Anspruch nehmen, da die Übertragung der Dienstedaten aufgrund eines fehlenden Guthabens für die anfallende Übertragungsgebühr abgebrochen wird.

Demzufolge liegt der vorliegenden Erfindung die Aufgabe zugrunde, ein Verfahren zum Betrieb eines Vergebührungssystems zur Verfügung zu stellen, welches eine gegenseitige Abhängigkeit von für die Übertragung von Dienstedaten anfallende Übertragungsgebühren und der Nutzung eines Dienstes berücksichtigt. Des weiteren ist es Aufgabe der Erfindung, ein Vergebührungssystem zur Durchführung des Verfahrens zur Verfügung zu stellen.

Diese Aufgabe wird verfahrensseitig durch die Merkmale des Patentanspruches 1 und vorrichtungsseitig durch die Merkmale des Patentanspruches 11 gelöst.

Ein wesentlicher Punkt der Erfindung liegt darin, dass in einem Verfahren zum Betrieb eines Vergebührungssystems zur Vergebührung der Nutzung von durch einen Diensteanbieter angebotenen Diensten und der Übertragung von Dienstedaten über ein von einem Dienstenutzer verwendetes Endgerät unter Nutzung eines Kommunikationsnetzes mit einem Netzbetreiber das Vergebührungssystem vor der Nutzung eines Dienstes und vor der Übertragung der Dienstedaten eine Nutzungsgebühr und eine Übertragungsgebühr ermittelt, durch Korrelation beider Vergebührungstypen mit geeigneten Parametern eine verrechnete Gesamtgebühr festgestellt und eine Abbuchung der korrelierenden Gesamtgebühren von einem Guthabenkonto des Dienstenutzers initiiert. Alternativ kann in einem Postpaid-Modus eine Rechnung für eine nachträgliche Gebührenabrechnung erstellt werden. Auf diese Weise wird sichergestellt, dass eine Übertragung von Dienstedaten aufgrund eines nicht ausreichend gedeckten Guthabenkontos für die anfallende Übertragungsgebühr nicht abgebrochen wird. Vielmehr findet mittels des Vergebührungssystems bereits vor der Nutzung des Dienstes eine Überprüfung auf ausreichende Deckung des Guthabenkontos statt, so dass eine Zahlung sowohl der Nutzungs- als auch der Übertragungsgebühr sichergestellt ist.

Gemäß einer bevorzugten Ausführungsform wird eine Anfangsgebühr bereits vor der Ermittlung der Nutzungs- und Übertragungsgebühren vom Guthabenkonto abgebucht oder deren Abbuchung initiiert, wobei die Anfangsgebühr vorab für weitere Übertragungen von Daten dient. Beispielsweise kann diese Anfangsgebühr dafür genutzt werden, einen Zugriff auf die Dienste eines Diensteanbieters durch Anmelden des Dienstenutzers bei dem Diensteanbieter überhaupt zu ermöglichen. Des weiteren kann die Anfangsgebühr dafür verwendet werden, den Inhalt kostenloser WEB/WAP-Seiten zu nutzen bzw. zu verändern. Eine derartige Anfangsgebühr, die der Übertragung eines bestimmten Datenumfangs entspricht, kann beispielsweise 0.1 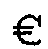 für die Übertragung eines Datenumfangs von 10 kB betragen. Üblicherweise wird die Übertragung eines Datenumfangs von 10 kB von deutschen Netzbetreibern zur Verfügung gestellt.

Vorzugsweise wird für jede Vergebührung eine erste Identifikationsnummer erzeugt, die dazu dient, einen Vergebührungsvorgang in den mit dem Vergebührungssystem verbundenen einzelnen Einrichtungen wiederzuerkennen. Im einzelnen handelt es sich hierbei um einen mit dem Vergebührungssystem direkt verbundenen Diensteanbieter, dem Guthabenkonto, einer Steuerungseinrichtung zur Steuerung der Abbuchungsvorgänge und Gutschreibevorgänge des Kontos sowie eine Schnittstelle, die dazu dient, einem außerhalb des Kommunikationsnetzes angeordneten mobilen Endgerät den Zugang zu dem Hip-basierten Kommunikationsnetz - wie beispielsweise dem Internet - mittels GPRS (General Packet Radio Service) zu ermöglichen. Die Schnittstelle besteht hierfür aus einem Supporting GPRS Support Node (SGSN) und einem Gateway GPRS Support Node (GGSN), die über ein GPRS Tunneling Protocol (GTP) miteinander in Verbindung stehen.

Vorteilhaft weist das GGSN dem mobilen Endgerät eine IP-Adresse bei erstmaligem Zugriff des Endgerätes auf das Kommunikationsnetz zu. Das Vergebührungssystem korreliert mittels dieser weitergereichten IP-Adresse (zweite Identifikationsnummer) die Nutzungs- und Übertragungsgebühr.

Nach der Abbuchung der Anfangsgebühr wird eine Verbindung zwischen dem Endgerät und dem Diensteanbieter insbesondere mittels eines TCP/IP-Übertragungsprotokolls und eines GTP-Protokolls zur Auswahl eines Dienstes durch den Dienstenutzer aufgebaut. Nachdem der Dienstenutzer einen bestimmten Dienst ausgewählt hat, wird von dem Diensteanbieter an das Vergebührungssystem eine Nachricht mit Angaben über den Wert der Nutzungsgebühr und/oder dem Datenumfang der an das Endgerät zu übertragenden Dienstedaten zusammen mit der zweiten Identifikationsnummer gesendet. Auf diese Weise erhält das Vergebührungssystem die für die Berechnung der voraussichtlich anfallenden Gebühren notwendigen Daten. Eine sich anschließende Berechnung, insbesondere der Übertragungsgebühren hat zur Folge, dass der sich aus der Übertragungsgebühr und der Nutzungsgebühr zusammensetzende Betrag mit oder ohne Hilfe der Steuereinrichtung vom Guthabenkonto abgebucht wird. Erst nach der Abbuchung der Gebühren findet eine Nutzung des Dienstes durch Übertragung der Dienstedaten von dem Diensteanbieter an das Endgerät statt.

Sofern der Wert der im voraus abgebuchten Übertragungs- und Nutzungsgebühren den Wert der reell angefallenen Gebühren nach Beendigung des Nutzungsvorgangs übersteigt, wird mittels eines mit einer in dem Vergebührungssystem abgeordneten Vergleichseinrichtung durchgeführter Vergleich ein Differenzwert ermittelt und dieser dem Guthabenkonto gutgeschrieben.

Vorzugsweise weist ein Vergebührungssystem zur Durchführung des Verfahrens eine Empfangseinrichtung zum Empfangen einer von einem Diensteanbieter übertragenen Nutzungsgebühr und eine Berechnungseinrichtung zum Berechnen einer Übertragungsgebühr aus von dem Diensteanbieter übertragenen Angaben zu dem Datenumfang von an das Endgerät zu übertragene Dienstedaten auf. Um eine Abbuchung der anfallenden Gebühren zu realisieren, ist das Vergebührungssystem mit der Steuereinrichtung zur Steuerung von Abbuchungsvorgängen und Gutschriften eines Guthabenkontos verbunden.

Weitere vorteilhafte Ausführungsformen ergeben sich aus den Unteransprüchen.

Vorteile und Zweckmäßigkeiten sind der nachfolgenden Beschreibung der Ausführungsbeispiele in Verbindung mit den Zeichnungen zu entnehmen. Hierbei zeigen:
Fig. 1 eine schematische Darstellung einer ersten Ausführungsform der Erfindung und
Fig. 2 eine schematische Darstellung einer zweiten Ausführungsform der Erfindung.

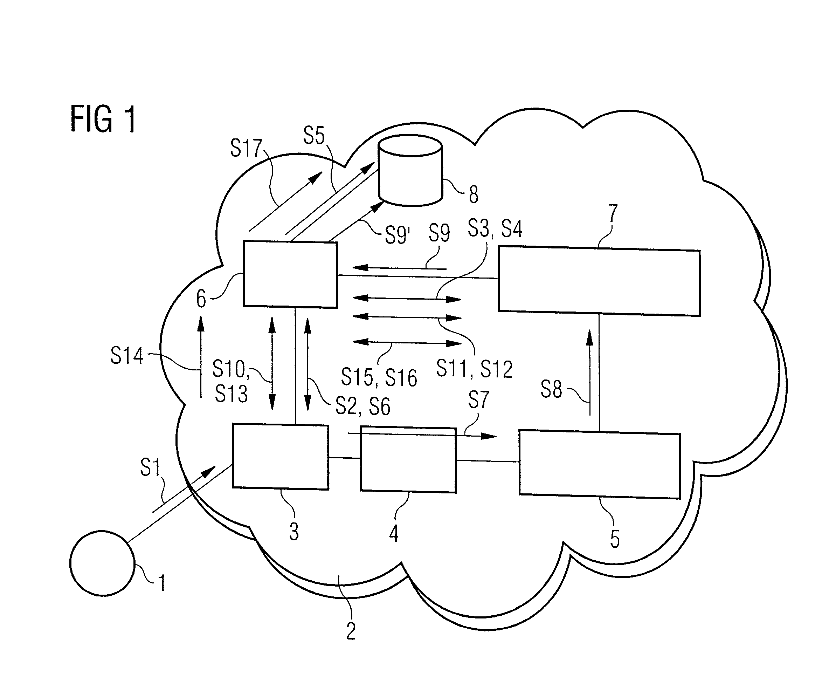

Fig. 1 zeigt in einer schematischen Darstellung die erste Ausführungsform der Erfindung. Der Nutzer eines mobilen Endgerätes 1 greift mittels seines Endgerätes auf ein Kommunikationsnetz 2 mit einem Netzbetreiber zu, um einen Dienst eines Diensteanbieters in Anspruch zu nehmen. Unter Nutzung eines Verfahrens zur paketorientierten Datenübertragung (GPRS) wird eine Verbindung zu einem Supporting GPRS Support Node (SGSN) aufgebaut (Schritt S1).

In Verbindung mit dem SGSN wird ein Gateway GPRS Support Node (GGSN) 4, das mit dem SGSN über ein GPRS Tunneling Protocol (GTP) kommuniziert, als Schnittstelle für den Zugang zu einem Diensteanbieter 5 verwendet.

Der Diensteanbieter 5 ist mit dem GGSN 4 verbunden. In einem Schritt S2 wird mittels eines eingerichteten Triggers und über das Zeichengabesystem Nr.7 (SS7) in Verbindung mit dem Protokoll CAP (CAMEL Application Part) einem Service Control Point als Network-Element (SCP) signalisiert, dass ein Endgerät den Zugriff auf einen Dienst beabsichtigt. Hierfür sendet der SGSN die Operation "Initial DP GPRS", die für eine Online-Vergebührung notwendige Parameter enthält.

In einem Schritt S3 wird abhängig von der MSIDSDN des Endgerätes 1 über ein auf TCP/IP-Protokoll basierendes "Online"-Interface eine Signalisierung von der SCP an ein Vergebührungssystem 7 gesendet, um eine Anfangsgebühr als Reservierung für eine anstehende Vergebührung der Übertragung von Daten zu bewirken. Dies geschieht durch das Abbuchen der Anfangsgebühr von einem Guthabenkonto 8.

In einem Schritt S4 führt das Vergebührungssystem über eine interne Funktion ein Rating durch, um die Anfangsgebühr für eine anfängliche Reservierung eines Geldbetrages für die zukünftige Übertragung von Daten durchzuführen. In Antwort auf das Rating wird von dem Vergebührungssystem 7 ein neuer Transaktions-Kontext für den Vergebührungsvorgang im Zusammenhang mit der Nutzung des Dienstes geöffnet, wobei in dem Transaktions-Kontext bekannte Parameter (z.B. MSIDSDN des Endgerätes 1, Wert der reservierten Gebühr, etc.) zu dieser Transaktion registriert werden. Der Wert der reservierten Gebühr, welcher der Anfangsgebühr entspricht, wird zusammen mit einer eindeutigen Transaktions-Identifikationsnummer an den SCP gesendet, der die Abbuchungsvorgänge des Guthabenkontos 8 steuert. Der Wert des reservierten Guthabens kann hierbei Null betragen.

Der SCP bucht in dem Schritt S5 den übertragenen Wert für die Anfangsgebühr von dem intern geführten Guthabenkonto 8 ab. Die erfolgreiche Abbuchung wird in einem hier nicht gezeigten Schritt dem Vergebührungssystem gemeldet.

Der SCP meldet mit den Operationen "Apply Charging GPRS" und "Connect GPRS" dem SGSN die bewilligte Anfangsgebühr bzw. den Datenumfang, der mit der bewilligten Anfangsgebühr übertragen werden kann. Der Datenumfang kann z.B. 10 kB betragen. Zudem wird die Transaktions-ID als Parameter an den SGSN weitergegeben.

In einem Schritt S7 sucht sich der Nutzer einen angebotenen Dienst des Diensteanbieters 5 aus, nachdem eine Verbindung von dem Endgerät 1 zu dem Diensteanbieter 5 auf der Basis eines TCP/IP-Protokolls aufgebaut wurde. Beispielsweise kann es sich um den angebotenen Dienst eines MP3-Downloads handeln, für den der Diensteanbieter 5 eine Nutzungsgebühr von 0.50 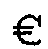 verlangt. Sofern sich der Dienstenutzer für die Nutzung des angebotenen Dienstes entscheidet, besteht die Notwendigkeit, dass ein MP3 zur angebotenen Nutzungsgebühr auf sein Endgerät heruntergeladen wird.

Bevor jedoch der Diensteanbieter 5 ein Herunterladen ermöglicht, wird mittels einer Nachricht an das Vergebührungssystem 7 die Nutzungsgebühr für den Dienst und weitere Angaben zum Dienst, wie beispielsweise über den Datenumfang der herunterzuladenden MP3-Dienstedaten, zusammen mit der von dem SGSN an den Diensteanbieter 5 weitergeleiteten Transaktions-Identifikationsnummer gesendet.

In den Schritten S9 und S9' wird nach Durchführung einer Berechnung der anfallenden Übertragungsgebühren auf Basis der übertragenen Angaben ein Gesamtbetrag ermittelt, der dem SCP mittels einer Nachricht zugesendet wird, um eine Abbuchung desjenigen von dem Guthabenkonto 8 zu bewirken. Innerhalb des Transaktions-Kontextes bleibt der Datenumfang des ausgewählten Dienstes gespeichert.

Das SGSN wird durch Übertragung einer Nachricht "Apply Charging Report" in einem Schritt S10 dem SCP eine Aufforderung zur Zuteilung zusätzlicher Übertragungsgebühren bzw. des damit zusammenhängenden Datenumfangs zusenden, da der Wert der bereits reservierten Übertragungsgebühren durch die Inanspruchnahme des Diensteanbieters in der Regel überstiegen wird.

In einem Schritt S11 wird von dem SCP eine Nachricht an das Vergebührungssystem 7 gesendet, mittels welcher dem Vergebührungssystem mitgeteilt wird, dass ein höherer Datenumfang als der durch die Anfangsgebühr zur Verfügung gestellte Datenumfang zur Inanspruchnahme des Dienstes benötigt wird. In einem Schritt S12 fordert das Vergebührungssystem 7 den SCP auf, den bereits zur Verfügung gestellten erhöhten Datenumfang an den SGSN weiterzugeben.

Der SCP gibt in einem Schritt S13 den erhöhten Datenumfang an den SGSN weiter. Nach Beendigung des Vergebührungsablaufes sendet das SGSN in einem Schritt S14 eine Beendigungsnachricht an den SCP ("Apply Charging Report").

Das Vergebührungssystem 7 erhält in einem Schritt S15 ebenso eine Nachricht über die Beendigung des Vergebührungsablaufes und erstellt eine endgültige Abrechnung über die reell angefallenen Gebühren. In einem Schritt S16 fordert das Vergebührungssystem 7 den SCP dazu auf, den durch Vergleichen der vorab zur Verfügung gestellten Gebühren und der reell angefallenen Gebühren ermittelten Differenzbetrag auf das Guthabenkonto des Nutzers rückzubuchen. In einem Schritt S17 bucht der SCP diesen Differenzbetrag auf das Guthabenkonto 8 zurück.

Aufgrund der zentralen Anordnung eines Vergebührungssystems wird der bisher notwendige Signalisierungsaufwand zwischen dem SGSN und dem SCP reduziert, wodurch die Belastung des Kommunikationsnetzes und die anfallenden Kosten des Netzbetreibers reduziert werden.

Da in dem Guthabenkonto jede Vergebührung eines Dienstes bereits die anteiligen Übertragungsgebühren enthält, ist es möglich, die Abbuchungsaufträge des Guthabenkontos für den Dienstenutzer übersichtlicher zu gestalten.

Anhand eines Anwendungsbeispiels wird die erste Ausführungsform des erfindungsgemäßen Verfahrens nochmals kurz beschrieben:

In den Schritten S2 bis S6 bucht das Vergebührungssystem 7 vom Guthabenkonto 8 eine Gebühr von 1 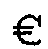 ab, die einen zu übertragenden Datenumfang von 10 kB entspricht. Dieser Datenumfang wird dem SGSN als "granted Volume" mitgeteilt.

In einem Schritt S7 wählt der Dienstenutzer über den Diensteanbieter 5 den Dienst des Versenden einer elektronischen Postkarte aus. In dem Schritt S8 sendet der Diensteanbieter 5 an das Vergebührungssystem 7 eine Zahlungsanforderungsnachricht, mittels welcher mitgeteilt wird, dass der Dienstenutzer den Dienst in Anspruch nehmen möchte und für den Dienst 3 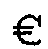 bezahlen muss. Der Datenumfang für die zu übertragende Postkarte beträgt dabei 50 kB. Der Diensteanbieter 5 sendet mit dieser Nachricht eine Aufforderung zur Reservierung des Betrages.

In den Schritten S9 und S9' erkennt das Vergebührungssystem an der weitergereichten Transaktions-ID, dass es sich um eine Inanspruchnahme eines Dienstes eines bestimmten Dienstenutzers handelt, dem bereits eine Anfangsgebühr bzw. ein Anfangsdatenumfang zugesprochen worden ist. Um sicherzustellen, dass der Dienstenutzer für die Nutzung des Dienstes bezahlen kann, greift das Vergebührungssystem 7 vorab auf das Guthabenkonto 8 des Nutzers zu und bucht den Betrag von 3 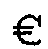 ab. Nach erfolgreicher Abbuchung meldet das Vergebührungssystem 7 die erfolgreiche Reservierung des Betrages an den Diensteanbieter, woraufhin dieser die zu übertragenden Dienstedaten mit einem Datenumfang von 50 kB dem Transaktions-Kontext hinzufügt.

In den Schritten S10 bis S13 fordert das SGSN zusätzlich zu dem Anfangsdatenumfang einen weiteren zur Verfügung gestellten Datenumfang zur Übertragung von Daten mit einem Datenumfang von 50 kB. Das Vergebührungssystem stellt diesen erhöhten Datenumfang bzw. die Übertragungsgebühr zur Verfügung.

In einem Schritt S14 wird nach Abschluss der erfolgreichen Dienstesnutzung eine Nachricht von dem Diensteanbieter 5 an das Vergebührungssystem 7 gesendet, mittels welcher die erfolgreiche Inanspruchnahme des Dienstes mitgeteilt wird. Der Diensteanbieter 5 erhält daraufhin den reservierten Betrag gutgeschrieben.

Weiterhin kann der Diensteanbieter Angaben über die wirklich gesendete Datenmenge an das Vergebührungssystem senden. Diese beauftragt den SCP bei Feststellung eines Differenzbetrages zu einem Gutschreiben dieses Differenzbetrages auf das Guthabenkonto des Nutzers.

Der Differenzbetrag wird in den Schritten S15 bis S17 zunächst in einer Endabrechnung berechnet. Hierfür wird der tatsächlich gebrauchte Datenumfang (53 kB), der sich aus der Dienstesnutzung (50 kB) und der Anforderung des Dienstes beim Diensteanbieter sowie dem Rest des Ablaufs der Nutzung des Dienstes (3 kB) zusammensetzt, angegeben. Demzufolge muss dem Dienstenutzer derjenige Betrag gutgeschrieben werden, der der nicht verbrauchten Datenmenge in Höhe der restlichen 7 kB entspricht, also 0.7 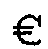 . Auf dem Guthabenkonto existiert nun eine Belastung von 3 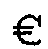 für die Inanspruchnahme des Postkartendienstes und 0.3 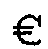 für die Übertragung vor und nach der Nutzung des Dienstes.

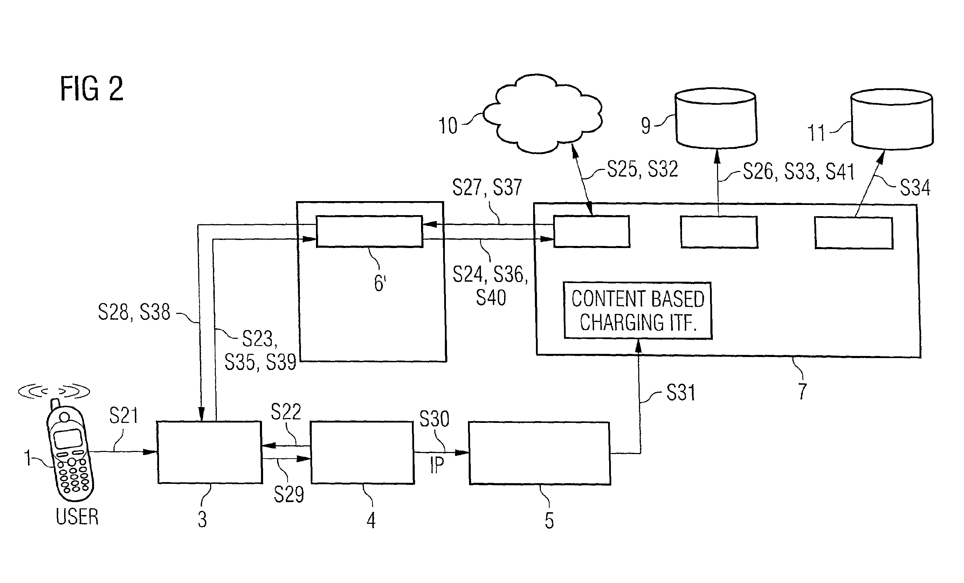

Die in Fig. 2 gezeigte zweite Ausführungsform des erfindungsgemäßen Verfahrens setzt sich im wesentlichen aus den Schritten des Verfahrens gemäß der ersten Ausführungsform zusammen. In einem Schritt S21 greift das Endgerät 1 auf das Netz des Netzbetreibers über das SGSN 3 und das GGSN 4 zu. Das GGSN vergibt in einem Schritt S22 eine IP-Adresse an den Dienstenutzer und sendet diese an das SGSN zurück.

In dem Schritt S23 wird mittels eines Triggers einem Parlay-Gateway 6' als Steuereinrichtung der Zugriff des Endgerätes 1 auf das Netz mitgeteilt. Dies geschieht wiederum über das Zeichengabesystem Nr. 7 (SS7) und über das Protokoll CAP.

In einem Schritt S24 wird eine Online-Vergebührungsinformation über die Übertragung von Daten und die IP-Adresse des Dienstenutzers an das Vergebührungssystem 7 weitergeleitet. Hierfür unterstützt das Parlay-Gateway die "Data Session Control"-Funktion aus dem Standard der "Open Service Access (OSA)" des UMTS Release 4, 3GPP TS 29.198-8.

In dem Schritt S25 führt das Vergebührungssystem 7 wiederum über eine interne Funktion das Rating durch. Hierfür greift das Vergebührungssystem 7 auf die Rating-Parameter C zu.

In einem Schritt S26 wird durch Zugriff auf ein Prepaid-System 9, welches die Konten des Nutzers verwaltet, eine Abbuchung der Anfangsgebühr bewirkt.

In einem Schritt S27 weist das Vergebührungssystem 7 das Parlay-Gateway 6', mittels der Parlay/OSA-Methode "superviseDataSession" und dem Parameter "granted Volume" an, welcher Datenumfang dem Dienstenutzer anfänglich zur Verfügung gestellt werden soll.

Das Parlay-Gateway setzt diese erhaltene Methode in einem Schritt S28 in die Operation "Apply Charging GPRS" und "Connect GPRS" um und meldet dem SGSN 3 den genehmigten Datenumfang. Dieser kann beispielsweise 10 kB sein.

In einem Schritt S29 baut das SGSN mittels des GTP-Protokolls die eigentliche Datenverbindung zum GGSN auf. Der Dienstenutzer kann nun über eine Internet-Protokoll (IP)-Verbindung auf den Diesteanbieter 5 zugreifen. In einem Schritt S30 wählt dann der Dienstenutzer in der bereits beschriebenen Weise einen entsprechenden Dienst aus. Bevor der Diensteanbieter 5 ein Herunterladen der Dienstedaten durch das Endgerät 1 zulässt, wird eine Nachricht über ein "Content Based Charging"-Interface an das Vergebührungssystem gesendet, mittels welchem nähere Angaben zu dem Datenumfang der herunterzuladenden Dienstedaten gemacht werden. Hierfür unterstützen der Diensteanbieter und das Vergebührungssystem 7 das "Content Based Charging"-Interface, das in dem Standard "Open Service Access (OSA)" des UMTS Release 4, 3GPP TS 29.198-12 festgelegt ist.

Optional kann eine Authentifizierung und Autorisierung des Diensteanbieters mittels des Parlay/OSA-Frameworks in dem Vergebührungssystem durchgeführt werden, um die Nutzungsberechtigung des Diensteanbieters für das Vergebührungssystem sicherzustellen.

In einem Schritt S32 wird in der bereits beschriebenen Weise der Gesamtbetrag der anfallenden Gebühren berechnet. Anschließend wird in einem Schritt S33 dieser Betrag von dem Guthabenkonto abgebucht. Alternativ kann in einem Schritt S34 eine Rechnung für eine nachträgliche Abrechnung (Postpaid) mittels dem Ticket Data Base L erzeugt werden.

In den Schritten S35 und S36 fordert das SGSN das Parlay-Gateway 6' mit der Nachricht "Apply Charging Report" wiederum auf, zusätzlichen Datenumfang in Form von Übertragungsgebühren zur Verfügung zu stellen und das Parlay-Gateway 6' teilt dem Vergebührungssystem 7 mit Hilfe der Methode "supervisedDataSessionRes" diese Anforderung mit.

In den Schritten S37 und S38 fordert das Vergebührungssystem 7 das Parlay-Gateway 6' mit Hilfe der Methode "supervisedDataSessionRequest" auf, den erhöhten Datenumfang an das SGSN weiterzugeben, woraufhin das Parlay-Gateway 6' den erhöhten Datenumfang weitergibt.

In dem Schritt S39 sendet das SGSN nach Beendigung der Nutzung des Dienstes eine Beendigungsnachricht an das Parlay-Gateway ("Apply Charging Report"), und in dem Schritt S40 wird das Vergebührungssystem 7 von der Beendigung von der Nutzung des Dienstes in Kenntnis gesetzt. In dem Schritt S41 schreibt das Vergebührungssystem 7 einen Differenzbetrag in bereits beschriebener Weise dem Guthabenkonto über das Prepaid-System 9 gut.

## Patentansprüche

1. Verfahren zum Betrieb eines Vergebührungssystems zur Vergebührung der Nutzung von durch einen Dienstanbieter (5) angebotenen Diensten und der Übertragung von Dienstedaten über ein von einem Dienstenutzer verwendetes Endgerät (1) unter Nutzung eines Kommunikationsnetzes (2) mit einem Netzbetreiber,
**dadurch gekennzeichnet, dass**
das Vergebührungssystem (7) vor der Nutzung eines Dienstes und vor der Übertragung der Dienstedaten eine Nutzungsgebühr und eine Übertragungsgebühr ermittelt, diese miteinander zu Gesamtgebühren korreliert und eine Abbuchung der Gesamtgebühren von einem Guthabenkonto (8) des Dienstenutzers (S9, S33) oder eine Rechnungserstellung (34) für eine nachträgliche Gebührenabrechnung initiiert.

2. Verfahren nach Anspruch 1,
**dadurch gekennzeichnet, dass**
das Vergebührungssystem (7) vor der Ermittlung der Nutzungs- und Übertragungsgebühren eine Anfangsgebühr für Übertragungen weiterer Daten und/oder Nutzungen weiterer Dienste vom Guthabenkonto abbucht (S25) oder deren Abbuchung initiiert (S5).

3. Verfahren nach Anspruch 1 oder 2,
**dadurch gekennzeichnet, dass**
das Vergebührungssystem (7) jeder Vergebührung der Nutzung von Diensten und Übertragung von Dienstedaten eine erste Identifikationsnummer zuweist.

4. Verfahren nach Anspruch 3,
**dadurch gekennzeichnet, dass**
die Identifikationsnummer und der Wert der Anfangsgebühr von dem Vergebührungssystem (7) an eine Steuereinrichtung (6, 6') zur Steuerung der Gebührenabbuchungen von dem Guthabenkonto (8) übertragen werden (S4, S27).

5. Verfahren nach einem der Ansprüche 2 bis 4,
**dadurch gekennzeichnet, dass**
nach Abbuchung der Anfangsgebühr eine Verbindung zwischen dem Endgerät (1) und dem Diensteanbieter (5), insbesondere mittels eines TCP/IP-Übertragungsprotokolls und eines GTP-Protokolls, zur Auswahl eines Dienstes durch den Dienstenutzer aufgebaut wird (S7, S29, S30).

6. Verfahren nach Anspruch 5,
**dadurch gekennzeichnet, dass**
der Diensteanbieter (5) nach dem Aufbau (S7, S29, S30) der Verbindung und vor der Nutzung des Dienstes durch den Dienstenutzer dem Vergebührungssystem (7) eine Nachricht mit Angaben über den Wert der Nutzungsgebühr und/oder den Datenumfang der an das Endgerät (1) zu übertragenden Dienstedaten und eine zweite dem Endgerät (1) zugeordnete Identifikationsnummer, insbesondere über ein Content Based Charging-Interface, zusendet (S8, S31).

7. Verfahren nach Anspruch 6,
**dadurch gekennzeichnet, dass**
das Vergebührungssystem (7) aus den mit der Nachricht übertragenen Angaben die Übertragungsgebühr berechnet (S32) und eine Abbuchung der durch eine Korrelation von Übertragungsgebühr und Nutzungsgebühr ermittelten Gesamtgebühr veranlasst (S9, S9') bzw. durchführt (S33).

8. Verfahren nach einem der vorangegangenen Ansprüche,
**dadurch gekennzeichnet, dass**
das Endgerät (1) über eine Schnittstelle (3), insbesondere vom Typ SGSN, mit dem Kommunikationsnetz (2) verbunden ist.

9. Verfahren nach Anspruch 8,
**dadurch gekennzeichnet, dass**
nach Beendigung der Nutzung des Dienstes die in der Schnittstelle (3) gespeicherten Werte für die Anfangsgebühr und die berechnete Übertragungsgebühr mit dem Wert der reell angefallenen Gebühren verglichen werden.

10. Verfahren nach Anspruch 9,
**dadurch gekennzeichnet, dass**
ein aus dem Vergleich resultierender Differenzwert der Gebühren auf das Guthabenkonto (8) gutgeschrieben wird.

11. Vergebührungssystem zur Durchführung des Verfahrens nach einem der vorangegangenen Ansprüche,
**gekennzeichnet durch**
eine Empfangseinrichtung zum Empfangen der von einem Diensteanbieter (5) übertragenen Angaben über den Wert einer Nutzungsgebühr und/oder dem Datenumfang der an ein Endgerät zu übertragenden Dienstedaten, und
eine Berechnungseinrichtung zum Berechnen einer Übertragungsgebühr aus übertragenen Angaben zu dem Datenumfang der zu übertragenden Dienstedaten.

12. Vergebührungssystem nach Anspruch 11,
**dadurch gekennzeichnet, dass**
das Vergebührungssystem (7) mit einer Steuereinrichtung (6, 6') zur Steuerung von Abbuchungs- und Gutschreibungsvorgängen eines Guthabenkontos (8) verbunden ist.
